# EUROPEAN PATENT APPLICATION

(11) **EP 4 851 506 A1**
(43) Date of publication of application: **09.12.2026**
(21) Application number: 26179926.6
(22) Date of filing: 20.05.2026
(51) Int. Cl.: F16K 3/02, F15B 11/02, F15B 15/14, F16K 3/18, F16K 31/122, F16K 47/00, F16K 51/02

(54) **GATE VALVE DRIVE SYSTEM AND GATE VALVE DRIVE METHOD**

(30) Priority: 06.06.2025 JP 2025094946
(71) Applicant: SMC Corporation, Tokyo 104-0031 (JP)
(72) Inventor: NISHIKAWA, Takeshi, Chiba, 277-0871 (JP)
(74) Representative: Keil & Schaafhausen Patentanwälte PartGmbB

(57) **Abstract**

[Object] To provide a gate valve drive system for a gate valve used in a vacuum chamber in a semiconductor manufacturing apparatus or the like, the gate valve drive system being capable of further suppressing dust generation occurring when a valve plate hermetically seals an opening while maintaining, as much as possible, high-speed performance of a series of opening and closing operations.

[Solution]

A gate valve (100) of the present invention has a drive unit (B) including: a parallel movement mechanism (E) that moves a valve assembly (A) parallel to a valve seat surface (6) of an opening (2) communicating with a vacuum chamber; and a perpendicular movement mechanism (F) that moves the valve assembly (A) perpendicularly.

An air cylinder (C) in the drive unit (B) includes: a drive cylinder portion (C1) in which a drive piston (13) is disposed; and a deceleration cylinder portion (C2) that is provided closer to a bonnet (7) than is the drive cylinder portion (C1), in which a deceleration piston (15) is disposed, and that makes the movement speed slower than the speed of movement by the drive cylinder portion (C1), the cylinder portions (17, 18) being formed in mutual communication.

Furthermore, an exhaust flow path (49) from a pressure chamber (18) of the deceleration cylinder portion (C2) is provided with a flow rate throttle valve or a pressure reducing valve for reducing exhaust speed.

## Description

### Technical Field

The present invention relates to a gate valve drive system and a gate valve drive method that are capable of opening and closing an opening communicating with a vacuum chamber in a manufacturing apparatus for semiconductors or the like.

### Background Art

For example, as a gate valve used for opening and closing an opening communicating with a vacuum chamber in a manufacturing apparatus for semiconductors or the like, there has already been known one configured to have a valve shaft to which a valve plate is attached and an air cylinder connected to the valve shaft, and to open and close the opening by operating the valve shaft with the air cylinder to bring a seal member of the valve plate into and out of contact with a valve seat surface provided around the opening.

Meanwhile, in a gate valve used in a semiconductor manufacturing apparatus, while prevention of dust generation is required in association with miniaturization of semiconductors, high-speed operation is also required at the same time from the standpoint of manufacturing efficiency.

In order to realize such requirements, for example, as in PTL 1, a non-sliding gate valve is known which has: a parallel movement mechanism that moves, parallel to a valve seat surface, from a fully open position at which a valve plate is not opposed to the valve seat surface to an opposed position at which the valve plate is opposed to the valve seat surface; and a perpendicular movement mechanism that moves, perpendicularly to the valve seat surface, from the opposed position to a fully closed position at which the opening is closed.

However, in recent years, with further miniaturization of semiconductors, higher-level prevention of dust generation has been required. In the gate valve in PTL 1, because the speed of a series of operations of the valve plate from the fully open position to the fully closed position is substantially constant, when it is desired to increase the speed of the series of operations, the speed at which the valve plate comes into and out of contact with the opening must also be increased, which may result in a risk that a valve seal may wear due to impact and vibration and induce dust generation.

### Citation List

### Patent Literature

PTL 1: Japanese Unexamined Patent Application Publication No. 2013-96557

### Summary of Invention

### Technical Problem

An object of the present invention is to provide a gate valve drive system and a gate valve drive method that are capable of further suppressing dust generation occurring when a valve plate comes into and out of contact with an opening, while maintaining, as much as possible, high-speed performance of a series of opening and closing operations between a fully open position and a fully closed position.

### Solution to Problem

In order to achieve the above object, a gate valve drive system according to the present invention is a gate valve drive system for driving a gate valve having: a valve assembly including a valve plate for opening and closing an opening communicating with a vacuum chamber, and a valve shaft connected to the valve plate; a drive unit having a bonnet through which the valve shaft extends so as to be displaceable in an axial direction, and an air cylinder for driving the valve assembly, the air cylinder being provided on a surface of the bonnet opposite to the valve plate; and a connection portion that includes a parallel movement mechanism that moves the valve plate parallel to a valve seat surface of the opening and a perpendicular movement mechanism that moves the valve plate perpendicularly to the valve seat surface, and that connects the valve assembly and the drive unit so as to be relatively displaceable. The air cylinder includes a drive cylinder portion in which a drive piston provided with a drive rod is slidably disposed, and a deceleration cylinder portion that is provided closer to the bonnet than is the drive cylinder portion, in which a deceleration piston is slidably disposed, and that makes a movement speed of the valve plate slower than a speed of movement by the drive cylinder portion in a state in which the drive piston is in contact with the deceleration piston, the cylinder portions being formed in mutual communication. An exhaust speed reducer for reducing exhaust speed is provided in an exhaust flow path from a deceleration pressure chamber, which is formed in the deceleration cylinder portion, on the bonnet side of the deceleration piston.

Furthermore, in the present invention, it is preferable that: the drive unit is provided with a first supply/exhaust port, a second supply/exhaust port, and a third supply/exhaust port; the first supply/exhaust port communicates with a first drive pressure chamber formed on a drive rod side of the drive piston, via a first communication passage provided in the drive unit; the second supply/exhaust port communicates with a second drive pressure chamber formed between the drive piston and the deceleration piston, via a second communication passage provided in the drive unit; and the third supply/exhaust port communicates with the deceleration pressure chamber via a third communication passage provided in the drive unit, and the exhaust flow path is connected to the third supply/exhaust port.

Furthermore, it is more preferable that the first to third supply/exhaust ports are provided in the bonnet.

Furthermore, in the present invention, it is preferable that: the gate valve drive system further includes a fluid circuit including a pressure supply source; the fluid circuit has a first switching valve that switches a supply state of air from the pressure supply source to the drive cylinder portion; and the first switching valve is connected to the first supply/exhaust port and the second supply/exhaust port, and selectively switches between a first switching state in which air is supplied to the first drive pressure chamber and air is exhausted from the second drive pressure chamber and a second switching state in which air is exhausted from the first drive pressure chamber and air is supplied to the second drive pressure chamber.

Furthermore, in the present invention, it is preferable that: the fluid circuit has a second switching valve that switches a supply state of air from the pressure supply source to the deceleration cylinder portion; the second switching valve is connected to the third supply/exhaust port and selectively switches between a state in which air is supplied to the deceleration pressure chamber and a state in which air is exhausted from the deceleration pressure chamber; and the exhaust speed reducer is a first flow rate throttle valve provided between the third supply/exhaust port and the second switching valve.

Alternatively, in the present invention, it is preferable that the exhaust speed reducer is a pressure reducing valve provided between the third supply/exhaust port and the pressure supply source.

Furthermore, in the gate valve drive system of the present invention, it is preferable that a supply flow path to the deceleration pressure chamber is provided with a supply speed reducer for reducing supply speed.

Furthermore, preferably, the exhaust speed reducer includes a first flow rate throttle valve, and the supply speed reducer includes a second flow rate throttle valve.

Alternatively, the exhaust speed reducer and the supply speed reducer may include pressure reducing valves.

Furthermore, the gate valve drive system according to the present invention can be driven by a gate valve drive method including, in a single valve closing process for moving the valve plate from a fully open position at which the valve plate is not opposed to the opening, through an opposed position at which the valve plate is opposed to the opening, to a fully closed position at which the valve plate closes the opening: a high-speed movement step of moving the valve plate at a high speed from the fully open position until the drive piston comes into contact with the deceleration piston; and a low-speed movement step, subsequent to the high-speed movement step, of moving the valve plate to the fully closed position at a speed lower than that in the high-speed movement step in a state in which the drive piston is in contact with the deceleration piston.

Furthermore, the gate valve drive system according to the present invention can be driven by a gate valve drive method in which a single valve closing process for moving the valve plate from a fully open position at which the valve plate is not opposed to the opening, through an opposed position at which the valve plate is opposed to the opening, to a fully closed position at which the valve plate closes the opening includes: a first high-speed movement step of moving the valve plate from the fully open position until the drive piston comes into contact with the deceleration piston; and a first low-speed movement step, subsequent to the first high-speed movement step, of moving the valve plate to the fully closed position in a state in which the drive piston is in contact with the deceleration piston, a movement speed of the valve plate being lower in the first low-speed movement step than in the first high-speed movement step, and a single valve opening process for moving the valve plate from the fully closed position, through the opposed position, to the fully open position includes: a second low-speed movement step of moving the valve plate from the fully closed position in a state in which the deceleration piston is in contact with the drive piston; and a second high-speed movement step, subsequent to the second low-speed movement step, of moving the valve plate to the fully open position by the drive piston, the movement speed of the valve plate being higher in the second high-speed movement step than in the second low-speed movement step.

Furthermore, in the gate valve drive method of the present invention, it is preferable that, when the valve plate is located between the opposed position and the fully closed position, the drive piston is in contact with the deceleration piston.

Alternatively, in the gate valve drive method, it is preferable that, when the valve plate is located between the fully closed position and a position between the opposed position and the fully closed position, the drive piston is in contact with the deceleration piston.

Alternatively, it is preferable that, when the valve plate is located between the fully closed position and a position between the fully open position and the opposed position, the drive piston is in contact with the deceleration piston.

### Advantageous Effects of Invention

According to the gate valve drive system and the gate valve drive method of the present invention, it is possible to further suppress dust generation occurring when the valve plate comes into and out of contact with the opening, while maintaining, as much as possible, high-speed performance of a series of opening and closing operations between the fully open position and the fully closed position.

### Brief Description of Drawings

[Fig. 1] Fig. 1 is a partial cross-sectional view illustrating an embodiment of a gate valve according to the present invention, in which a left half illustrates a state in which a valve assembly is at a fully open position and a right half illustrates a state in which the valve assembly is at an opposed position.
[Fig. 2] Fig. 2 is an exploded perspective view of a part of Fig. 1, illustrating a structure of a connection portion.
[Fig. 3] Fig. 3 illustrates structures of a first cam roller and a first cam groove in Fig. 2.
[Fig. 4] Fig. 4 includes longitudinal sectional views illustrating a relevant part in Fig. 1.
[Fig. 5] Fig. 5 illustrates a state in which a valve assembly of a gate valve according to the present invention is at a fully closed position.
[Fig. 6] Fig. 6 illustrates a relationship between: a parallel movement section and a perpendicular movement section of a gate valve; and a high-speed movement step and a low-speed movement step.
[Fig. 7] Fig. 7 is a diagram illustrating a fluid circuit of a first embodiment for driving a gate valve.
[Fig. 8] Fig. 8 is a diagram illustrating a fluid circuit of a second embodiment for driving a gate valve.
[Fig. 9] Fig. 9 includes flowcharts of a gate valve drive method according to the present invention.

### Description of Embodiments

A gate valve drive system of the present invention will be described.

In the following description, up, down, left, and right indicate directions in the drawings and do not limit actual installation positions or orientations.

### Gate Valve

### Valve Assembly

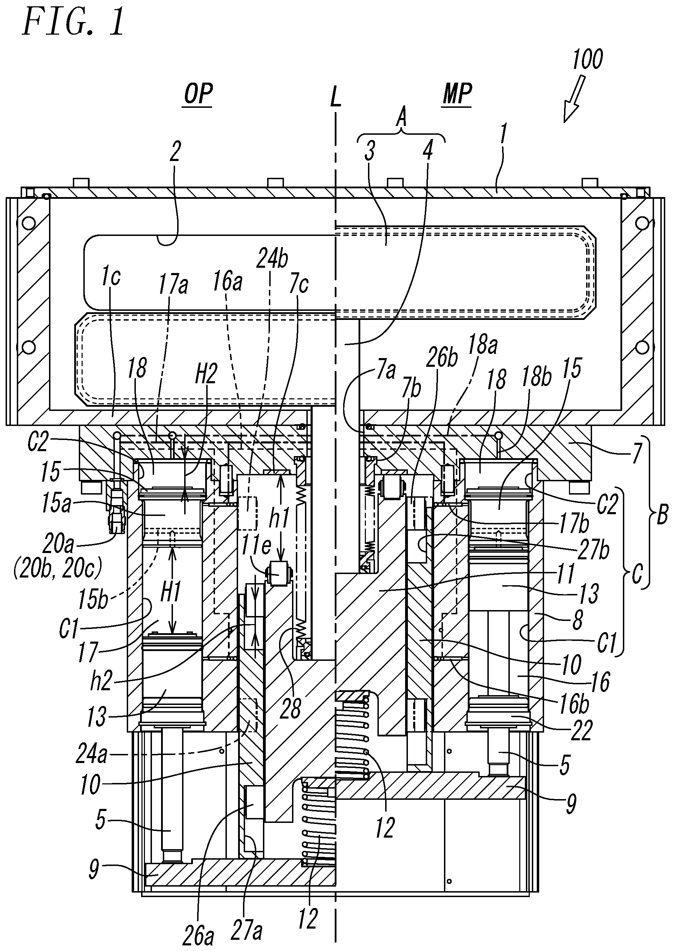

A gate valve 100 used in the present invention will be described with reference to Figs. 1 to 5.

The gate valve 100 has a valve assembly A including a valve plate 3 for opening and closing one opening 2 communicating with a vacuum chamber and a valve shaft 4 connected to the valve plate 3.

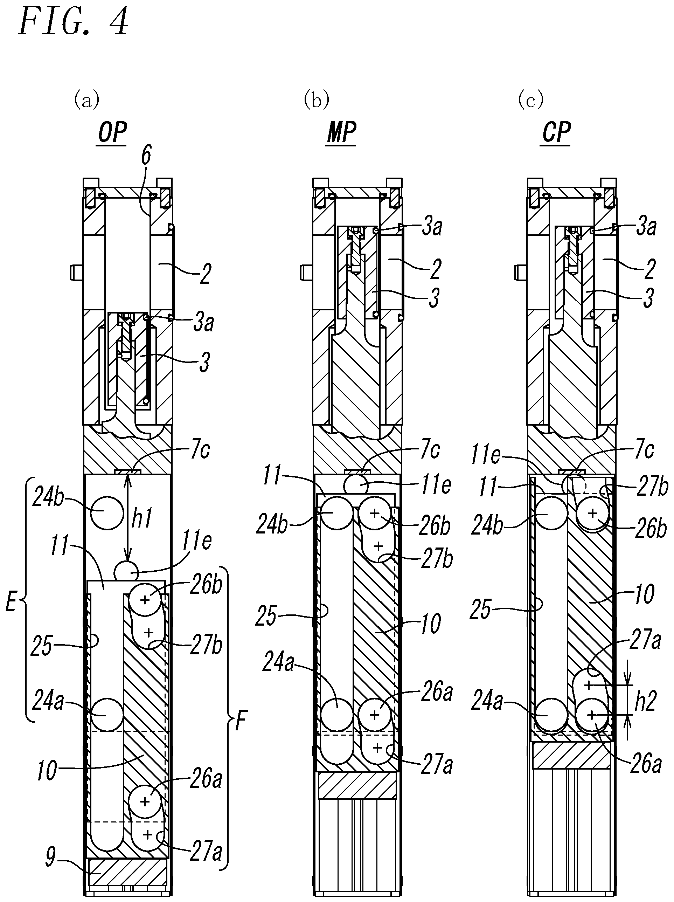

As illustrated in Figs. 1 and 4, a valve body 1 has a substantially rectangular parallelepiped box shape and is provided with two substantially rectangular openings that are long in a lateral direction.

The gate valve 100 is a so-called L-shaped gate valve that opens and closes one opening 2 among the openings.

On an inner surface of the opening 2, a valve seat surface 6, which is a flat surface, is formed in a substantially rectangular annular shape surrounding the opening 2.

Here, the left part of Fig. 1 and Fig. 4(a) show a case where the valve plate 3 is at a fully open position OP, at which the valve plate 3 is not opposed to the opening 2.

Furthermore, the right part of Fig. 1 and Fig. 4(b) show a case where the valve plate 3 is at an opposed position MP, at which the valve plate 3 is opposed to the opening 2.

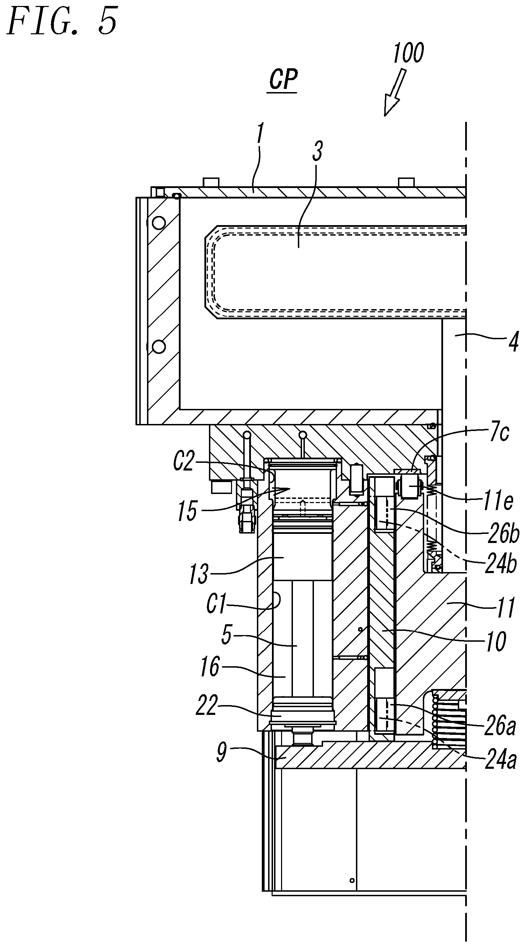

Furthermore, Figs. 5 and 4(c) show a case where the valve plate 3 is at a fully closed position CP, at which the opening 2 is closed.

The valve plate 3 has a laterally long rectangular shape similarly to the opening 2 and is formed in a plate shape having a larger area than the opening 2.

Furthermore, on a surface of the valve plate 3 disposed on the opening 2 side, a valve seal member 3a is mounted in a substantially rectangular annular groove in order to come into contact with the valve seat surface 6 and hermetically seal the opening 2.

The valve shaft 4 has an axis L, and at a distal end of the valve shaft 4, the valve plate 3 is detachably and fixedly attached by a detachable fastener such as a screw.

### Drive Unit

The gate valve 100 is provided with a drive unit B that includes: a bonnet 7 having a through hole 7a through which the valve shaft 4 extends so as to be displaceable in a direction of the axis L; and an air cylinder C for driving the valve assembly A, on a surface of the bonnet 7 opposite to the valve plate 3.

The base end (the lower end in Fig. 1) of the valve assembly A is inserted through the through hole 7a provided in the bonnet 7.

In this embodiment, the bonnet 7 is fixed to the outer surface of a bottom wall 1c of the valve body 1.

In this embodiment, the bonnet 7 and the bottom wall of the valve body 1 are separate bodies, but the bonnet 7 can also serve as the bottom wall.

The through hole 7a in the bonnet 7 has, on the surface of the bonnet 7 opposite to the valve plate 3, an enlarged diameter portion 7b having an enlarged diameter. One end of a bellows 28 covering the valve shaft 4 is attached to the enlarged diameter portion 7b, and the other end of the bellows 28 is fixed to a base end portion of the valve shaft 4.

The bellows 28 is formed so as to expand and contract in accordance with the perpendicular movement of the valve shaft 4.

Furthermore, both ends of the bellows 28 are fixed in an airtight manner, and the interior of the valve body 1 is completely shielded from the outside by the bellows 28.

On the surface of the bonnet 7 opposite to the valve plate 3, that is, the surface on the side at which the valve shaft 4 extends, two air cylinders C each provided with a drive rod 5 are fixed.

The two air cylinders C are fixed at left and right positions facing each other with the through hole 7a therebetween.

The drive rod 5 extends from the end surface of the air cylinder C on the side opposite to the bonnet 7.

Here, a cylinder housing 8 of the air cylinder C is formed to have a substantially rectangular outer peripheral shape in cross section.

The drive rod 5 and the valve shaft 4 are arranged parallel to the direction of the axis L.

In this manner, the bonnet 7 through which the valve shaft 4 extends movably in the direction of the axis L and the air cylinder C from which the drive rod 5 extends constitute the drive unit B for driving the valve assembly A.

### Air Cylinder

Here, the air cylinder C will be described in detail with reference to Fig. 1.

Each air cylinder C includes a drive cylinder portion C1 in which a drive piston 13 provided with the drive rod 5 is slidably disposed, and a deceleration cylinder portion C2 in which a deceleration piston 15 is slidably disposed on the bonnet 7 side relative to the drive cylinder portion C1, the cylinder portions being formed in series and in mutual communication.

The deceleration cylinder portion C2 is formed to have a larger diameter than the drive cylinder portion C1, and the deceleration piston 15 slides within the deceleration cylinder portion C2.

The pair of air cylinders C are fixed to the bonnet 7 in an orientation in which the axes of the drive rods 5 are parallel to the axis L of the valve shaft 4.

Furthermore, the deceleration piston 15 has a cylindrical stopper portion 15a extending into the drive cylinder portion C1.

The outer diameter of the stopper portion 15a is formed smaller than the inner diameter of the drive cylinder portion C1.

The drive piston 13 performs high-speed movement by the drive cylinder portion C1 until the drive piston 13 comes into contact with the stopper portion 15a of the deceleration piston 15.

As illustrated in Fig. 1, in the drive cylinder portion C1, on the drive rod 5 side of the drive piston 13, a first drive pressure chamber 16 having a first supply/exhaust hole 16b is provided.

Furthermore, between the drive piston 13 and the deceleration piston 15, a second drive pressure chamber 17 having a second supply/exhaust hole 17b is provided.

Furthermore, in the deceleration cylinder portion C2, on the bonnet 7 side of the deceleration piston 15, a deceleration pressure chamber 18 having a third supply/exhaust hole 18b is provided.

Furthermore, in the stopper portion 15a of the deceleration piston 15, an internal communication passage 15b that provides communication between the second supply/exhaust hole 17b and the second drive pressure chamber 17 is formed.

Here, in the drive cylinder portion C1 at the fully open position OP (the left part of Fig. 1), a distance H1 indicates the distance between the stopper portion 15a of the deceleration piston 15 and the drive piston 13.

The distance H1 is the distance between the drive piston 13 and the deceleration piston 15 and corresponds to the distance over which the drive piston 13 is moved at a high speed by the drive cylinder portion C1.

After the drive piston 13 comes into contact with the stopper portion 15a of the deceleration piston 15, the drive piston 13 in a contact state is decelerated by the deceleration piston 15 and moves at a low speed.

Furthermore, in the deceleration cylinder portion C2, a distance H2 indicates the distance between the deceleration piston 15 and the bonnet 7 of the deceleration cylinder portion C2.

The distance H2 indicates the distance over which the drive piston 13 and the deceleration piston 15 in a contact state can move at a low speed.

That is, in a low-speed movement step, within a range of the distance H2 over which the deceleration piston 15 is movable, the valve plate 3 comes into contact with and hermetically seals the opening 2.

The axial length of the stopper portion 15a is formed to be longer than the distance H2.

Accordingly, the drive piston 13 is driven within the drive cylinder portion C1.

Furthermore, in the drive unit B, first to third supply/exhaust ports 20a, 20b, and 20c are provided in the surface (the lower surface) of the bonnet 7 opposite to the valve plate 3.

The first supply/exhaust port 20a communicates with the first drive pressure chamber 16 via a first communication passage 16a and a first supply/exhaust hole 16b (communication passage) provided in the drive unit B.

Similarly, the second supply/exhaust port 20b communicates with the second drive pressure chamber 17 via a second communication passage 17a and a second supply/exhaust hole 17b (communication passage) provided in the drive unit B.

Furthermore, the third supply/exhaust port 20c communicates with the deceleration pressure chamber 18 via a third communication passage 18a and a third supply/exhaust hole 18b (communication passage) provided in the drive unit B.

The first to third supply/exhaust ports 20a, 20b, and 20c are connected to a fluid circuit that drives the gate valve 100.

### Connection Portion

Next, a connection portion D that connects the valve assembly A and the drive unit B will be described.

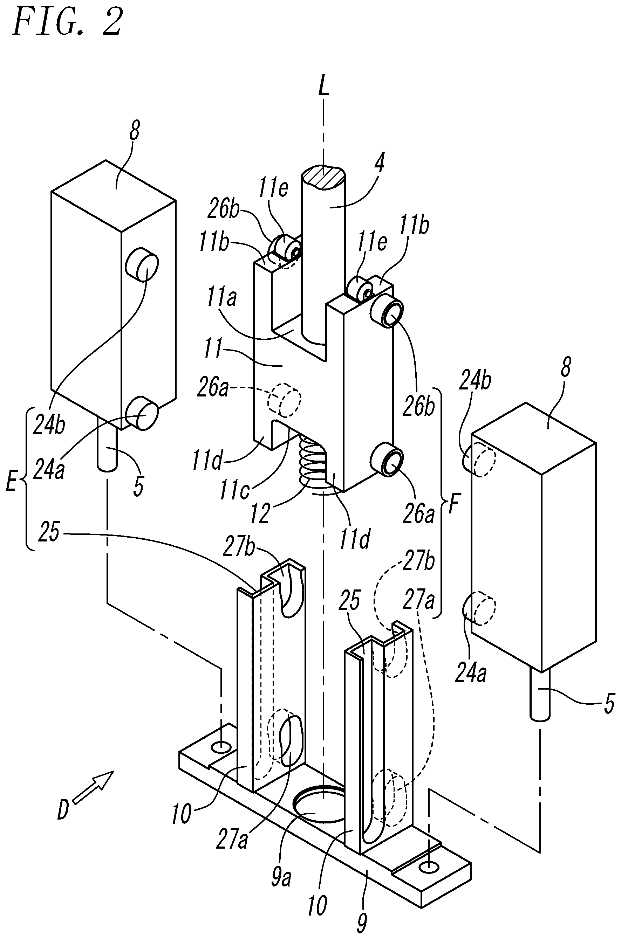

Fig. 2 mainly illustrates a specific configuration of the connection portion D.

Specifically, in Fig. 2, the connection portion D is a portion excluding the valve shaft 4, the drive rod 5, and the cylinder housing 8.

The connection portion D includes: a parallel movement mechanism E that moves the valve assembly A parallel to the valve seat surface 6; and a perpendicular movement mechanism F that moves the valve assembly A perpendicularly to the valve seat surface 6, and connects the valve assembly A and the drive unit B so as to be relatively displaceable.

The connection portion D will be described more specifically below.

As illustrated in Fig. 2, a center frame 11 is fixed to the base end portion of the valve shaft 4.

The center frame 11 is formed in a substantially H-shaped block shape and has a first recess 11a formed at the center on the bonnet 7 side (the upper side in Fig. 2), and a pair of first shoulder portions 11b formed on the left and right sides with the first recess 11a therebetween and forming side walls of the first recess 11a.

Furthermore, the center frame 11 has a second recess 11c formed at the center on the side opposite to the bonnet 7 in the direction of the axis L (the lower side in Fig. 2), and a pair of second shoulder portions 11d formed on the left and right sides of the second recess 11c and forming side walls of the second recess 11c.

The base end portion of the valve shaft 4 is fixed to the first recess 11a, and one end of a compression spring 12 described below in detail is attached to the second recess 11c.

Furthermore, stop rollers 11e are provided on the first shoulder portions 11b of the center frame 11.

On the inner surface of the bonnet 7, at portions facing the stop rollers 11e, as illustrated in Fig. 1 or Fig. 4, contact portions 7c with which the stop rollers 11e are brought into and out of contact are provided.

The contact portions 7c also have a function of cushioning and silencing the impact caused when the stop rollers 11e come into contact.

Furthermore, as illustrated in Fig. 2, the distal ends of the drive rods 5 of the two air cylinders C are fixed to a plate-shaped base frame 9 extending in the left-right direction.

In the surface of the base frame 9 facing the second recess 11c of the center frame 11, a recessed spring seat 9a is formed.

The compression spring 12 is disposed in the spring seat 9a.

The compression spring 12 has a spring force capable of supporting the weight of the valve assembly A and the center frame 11.

With this spring force, a first cam roller 26a described below is pressed against an upper end of a first cam groove 27a.

By doing so, when the valve plate 3 is moved parallel to the valve seat surface 6, the valve assembly A and the base frame 9 are moved integrally.

Then, when the valve plate 3 is moved perpendicularly to the valve seat surface 6 of the opening 2, the compression spring 12 is compressed to allow relative movement between the valve assembly A and the base frame 9.

Thus, the compression spring 12, the center frame 11, and the base frame 9 are included in the connection portion D that connects the valve shaft 4 and the drive rod 5 so as to be relatively displaceable.

Next, based on Figs. 1 and 2, the parallel movement mechanism E and the perpendicular movement mechanism F included in the connection portion D will be described.

In Fig. 2, the structure of the air cylinder C on an upper surface of the cylinder housing 8 is omitted.

### Parallel Movement Mechanism

The parallel movement mechanism E moves the valve plate 3 from the fully open position OP to the opposed position MP.

As illustrated in Fig. 2, a pair of left and right plate-shaped side frames 10 and 10 are fixed to the upper surface of the base frame 9 so as to be parallel to the axis L of the valve shaft 4, in such an arrangement that the inner surfaces thereof face a left side surface and a right side surface of the center frame 11, respectively.

Furthermore, on the inner side surfaces of the two cylinder housings 8 facing the valve shaft 4 side, two guide rollers (a first guide roller 24a and a second guide roller 24b) are attached at positions spaced apart in the top-bottom direction along the axis L.

In each side frame 10, one bottomed guide groove 25 extending along the axis L is formed at a position facing the first and second guide rollers 24a and 24b provided on the cylinder housing 8.

With this configuration, the guide rollers 24a and 24b are engaged so as to be movable within the guide groove 25.

Thus, the valve assembly A can move parallel to the valve seat surface 6 from the fully open position OP to the opposed position MP.

In the present embodiment, it is designed such that, when the stop rollers 11e of the center frame 11 come into contact with the contact portions 7c of the bonnet 7, the valve plate 3 reaches the opposed position MP.

Specifically, in Fig. 1, the distance h1 from the stop roller 11e to the contact portion 7c at the fully open position OP is the distance of parallel movement in the movement of the valve plate 3 from the fully open position OP to the opposed position MP.

As described above, the guide groove 25 of the side frame 10 and the guide rollers 24a and 24b constitute the parallel movement mechanism E for moving the valve plate 3 and the valve assembly A in the top-bottom direction parallel to (in the top-bottom direction in Fig. 1) the valve seat surface 6.

### Perpendicular Movement Mechanism

The perpendicular movement mechanism F moves the valve plate 3 from the opposed position MP to the fully closed position CP.

As illustrated in Fig. 2, on a surface of the center frame 11 facing the side frame 10, a first cam roller 26a and a second cam roller 26b are provided at positions spaced apart from each other in the top-bottom direction along the axis L.

In the side frame 10, two bottomed cam grooves, namely, a first cam groove 27a and a second cam groove 27b, are formed on the upper side and the lower side along the axis L, at positions facing the first cam roller 26a and the second cam roller 26b.

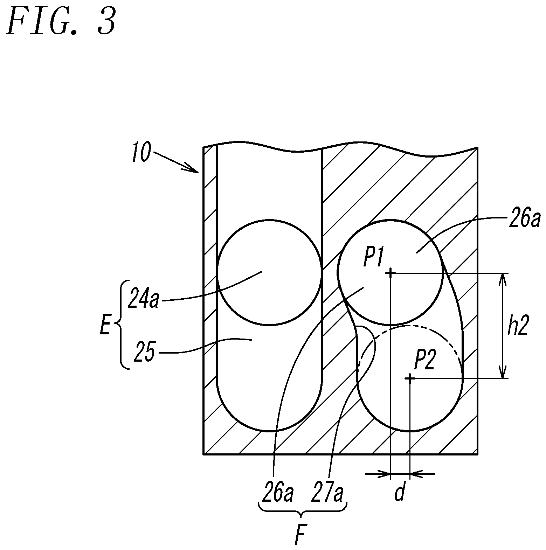

The first cam groove 27a and the second cam groove 27b are grooves inclined with respect to the axis L, and are inclined in a direction in which they gradually approach the valve seat surface 6 of the opening 2, as the first and second cam rollers 26a and 26b move toward the base frame 9 side (downward in Fig. 3).

The first cam roller 26a is fitted in the first cam groove 27a, and the second cam roller 26b is fitted in the second cam groove 27b.

Fig. 3 illustrates the relationship between the first cam roller 26a and the first cam groove 27a.

The first cam roller 26a is moved, following the first cam groove 27a, from a start position P1 on the bonnet 7 side (the upper end) toward an end position P2 on the base frame 9 side (the lower end side).

The first cam groove 27a is formed in an inclined manner such that the end position P2 is closer to the opening 2 (the right side in Fig. 3) than is the start position P1.

The same applies to the second cam groove 27b.

With this configuration, from the start position P1 toward the end position P2, the first cam roller 26a relatively moves in the direction of the axis L by the distance h2.

At this time, the first cam roller 26a moves, following the first cam groove 27a, perpendicularly to the valve seat surface 6 by a distance d.

The distance d is the distance of perpendicular movement in the movement of the valve plate 3 from the opposed position MP to the fully closed position CP.

In the present embodiment, an end on the start position P1 side (the upper side) of the second cam groove 27b is open at the upper end surface of the side frame 10, but may not be open similarly to the first cam groove 27a.

Thus, the valve plate 3 moves by the distance d in the direction perpendicular to the valve seat surface 6 (the left-right direction in Fig. 3) from the opposed position MP to the fully closed position CP.

In the present embodiment, it is designed such that, when the first and second cam rollers 26a and 26b move to the end position P2, the valve plate 3 reaches the fully closed position CP.

Specifically, the distance d illustrated in Fig. 3 indicates the distance of perpendicular movement by the perpendicular movement mechanism F.

As described above, the first cam groove 27a and the second cam groove 27b in the side frame 10, and the first cam roller 26a and the second cam roller 26b in the center frame 11 constitute the perpendicular movement mechanism F for moving the valve assembly A perpendicularly (in the left-right direction in Fig. 3) to the valve seat surface 6.

Here, the depths of the guide groove 25 and the first and second cam grooves 27a and 27b are deeper than half the thickness of the side frame 10.

Therefore, the guide groove 25 and the cam grooves 27a and 27b are arranged so as to be shifted in the width direction of the side frame 10, so that they do not overlap each other in the thickness direction of the side frame 10.

In the present embodiment, two cam grooves are provided, but the number thereof and the positional relationship therebetween are not limited to those of the present embodiment.

For example, three or more cam grooves may be formed in each side frame 10, or the cam grooves may be arranged so as to be shifted from each other in the width direction of the side frame 10.

Furthermore, the guide groove and the cam grooves may extend through the side frame 10 as long as the strength of the side frame 10 can be ensured.

As described above, the connection portion D is configured such that the valve shaft 4 and the drive rod 5 are relatively displaceable by means of the base frame 9, the side frames 10, the center frame 11 and the compression spring 12, the parallel movement mechanism E, and the perpendicular movement mechanism F.

Here, in the gate valve drive system of the present invention, in the gate valve 100, an exhaust flow path from the deceleration pressure chamber 18 is provided with an exhaust speed reducer for reducing exhaust speed.

The exhaust speed reducer is, for example, a flow rate throttle valve, a pressure reducing valve, an air regulator, an electro-pneumatic regulator, or the like.

In the present embodiment, the exhaust flow path is a flow path communicating with the third supply/exhaust port 20c.

Therefore, the exhaust speed reducer may be connected to the third supply/exhaust port 20c and is provided integrally with the gate valve.

Alternatively, as illustrated in the present embodiment described below, the exhaust speed reducer may be provided in a fluid circuit connected to the third supply/exhaust port 20c.

An embodiment in the case where the exhaust speed reducer is provided in the fluid circuit will be described below.

### Fluid Circuit

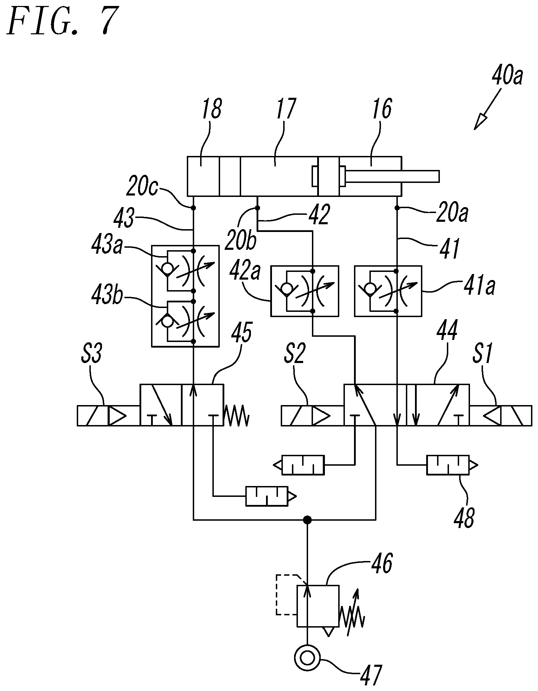

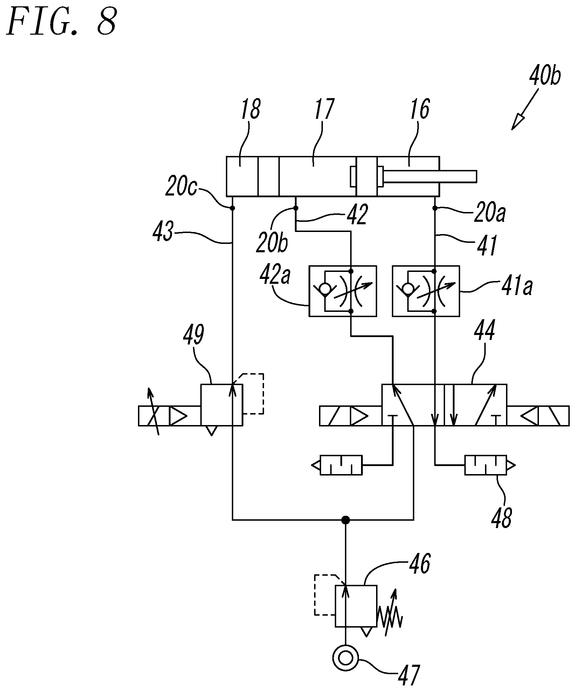

Based on Figs. 7 and 8, fluid circuits 40a and 40b in the gate valve drive system of the present invention will be described.

In the gate valve drive system, an exhaust speed reducer for reducing exhaust speed is provided in the exhaust flow path from the deceleration pressure chamber 18, which is formed on the bonnet 7 side of the deceleration piston 15 in the deceleration cylinder portion C2.

In the following embodiments, the fluid circuits 40a and 40b that drive the gate valve 100 will be described.

### First Embodiment

Fig. 7 illustrates a fluid circuit 40a including a pressure supply source 47 according to a first embodiment.

In the fluid circuit 40a, the air supplied from the pressure supply source 47 and subjected to pressure adjustment by a regulator 46 is supplied to the drive cylinder portion C1 and the deceleration cylinder portion C2.

### First Switching Valve

The fluid circuit 40a has a first switching valve 44 that switches the supply state of air from the pressure supply source 47 to the drive cylinder portion C1.

The first switching valve 44 is connected to the first supply/exhaust port 20a by a first air flow path 41 and is connected to the second supply/exhaust port 20b by a second air flow path 42.

The first switching valve 44 selectively switches between: a first switching state, in which air is supplied to the first drive pressure chamber 16 and air is exhausted from the second drive pressure chamber 17; and a second switching state, in which air is exhausted from the first drive pressure chamber 16 and air is supplied to the second drive pressure chamber 17.

The first switching valve 44 is an indirectly operated 5-port switching valve driven by first and second solenoids S1 and S2 on both sides.

In the first switching valve 44, when the first solenoid S1 is ON, air is supplied to the first drive pressure chamber 16 and exhausted from the second drive pressure chamber 17.

On the other hand, when the second solenoid S2 is ON, air is exhausted from the first drive pressure chamber 16 and supplied to the second drive pressure chamber 17.

A first drive throttle valve 41a is provided in the first air flow path 41, and a second drive throttle valve 42a is provided in the second air flow path 42.

The first and second drive throttle valves 41a and 42a are formed of a check valve and a variable throttle valve connected in parallel.

The first and second drive throttle valves 41a and 42a adjust the exhaust speed of air directed from the first drive pressure chamber 16 or the second drive pressure chamber 17 toward the first switching valve 44.

The air to be exhausted is exhausted via a silencer 48.

The drive cylinder portion C1 performs high-speed movement.

Therefore, the first and second drive throttle valves 41a and 42a are set such that the valve plate 3 moves as fast as possible.

### Second Switching Valve

The fluid circuit 40a has a second switching valve 45 that switches the supply state of air from the pressure supply source 47 to the deceleration cylinder portion C2.

The second switching valve 45 is connected to the third supply/exhaust port 20c by a third air flow path 43.

The second switching valve 45 selectively switches between a state in which air is supplied to the deceleration pressure chamber 18 and a state in which air is exhausted from the deceleration pressure chamber 18.

The third air flow path 43 is an exhaust flow path and also a supply flow path.

The second switching valve 45 is an indirectly operated 3-port switching valve driven by a single third solenoid S3.

The second switching valve 45 is of a so-called normally open type, in which, when the third solenoid S3 is OFF, air is always supplied to the deceleration pressure chamber 18.

When the third solenoid S3 is ON, air is exhausted from the deceleration pressure chamber 18.

In the gate valve drive system of the present invention, an exhaust speed reducer for reducing exhaust speed is provided in the exhaust flow path of the deceleration pressure chamber 18.

In the present embodiment, the exhaust speed reducer of the present invention is a first deceleration throttle valve 43a (an exhaust speed reducer, a first flow rate throttle valve) provided in an exhaust flow path between the third supply/exhaust port 20c and the second switching valve 45 in the third air flow path 43 (exhaust flow path).

The first deceleration throttle valve 43a allows inflow of air from the second switching valve 45 to the deceleration pressure chamber 18 and variably adjusts the exhaust speed of air from the deceleration pressure chamber 18 toward the second switching valve 45.

In the present embodiment, the first deceleration throttle valve 43a adjusts the exhaust speed so as to be slower than the speed of movement by the drive cylinder portion C1.

Thus, the valve plate 3 comes into contact with the valve seat surface 6 at a low speed due to the perpendicular movement mechanism F.

Furthermore, a second deceleration throttle valve 43b (a supply speed reducer, a second flow rate throttle valve) for reducing the supply speed to the deceleration pressure chamber 18 is also provided in the third air flow path 43 (a supply flow path).

The second deceleration throttle valve 43b throttles the inflow amount of air from the second switching valve 45 to the deceleration pressure chamber 18 and allows outflow of air from the deceleration pressure chamber 18 toward the second switching valve 45.

Thus, the valve plate 3 is separated from the valve seat surface 6 at a low speed by the perpendicular movement mechanism F.

Accordingly, in the present embodiment, the first deceleration throttle valve 43a (the first flow rate throttle valve) and the second deceleration throttle valve 43b (the second flow rate throttle valve) are configured to be able to adjust, so as to decelerate, both the air outflow speed and the air inflow speed between the second switching valve 45 and the deceleration pressure chamber 18.

Here, the first drive throttle valve 41a and the second drive throttle valve 42a in the drive cylinder portion C1 perform high-speed movement of the drive piston 13.

Therefore, concerning a valve closing process, the first deceleration throttle valve 43a (the first flow rate throttle valve) is set such that the movement of the valve plate 3 is slower than that with the second drive throttle valve 42a.

Similarly, concerning a valve opening process, the second deceleration throttle valve 43b (the second flow rate throttle valve) is set such that the movement speed of the valve plate is slower than that with the first drive throttle valve 41a.

### Second Embodiment

Fig. 8 illustrates a fluid circuit 40b including a pressure supply source 47 according to a second embodiment.

Also in the fluid circuit 40b, the air supplied from the pressure supply source 47 and subjected to pressure adjustment by the regulator 46 is supplied to the drive cylinder portion C1 and the deceleration cylinder portion C2.

The fluid circuit 40b also has the first switching valve 44 that switches the supply state of air from the pressure supply source 47 to the drive cylinder portion C1.

In the fluid circuit 40b that drives the gate valve 100 of the present embodiment, an electro-pneumatic regulator 49 (a pressure reducing valve), which serves as an exhaust speed reducer for reducing exhaust speed, is provided in a third air flow path 43 (an exhaust flow path, a supply flow path) from the deceleration pressure chamber 18 in the deceleration cylinder portion C2.

The electro-pneumatic regulator 49 (an exhaust speed reducer, a pressure reducing valve) is able to adjust, so as to decelerate, both the supply speed and the exhaust speed by reducing the pressure to a desired pressure.

Specifically, the electro-pneumatic regulator 49, serving as a pressure reducing valve, serves as both the exhaust speed reducer and the supply speed reducer of the present invention.

Other configurations are the same as those of the first embodiment, and therefore description thereof is omitted.

As described above, according to the fluid circuit 40a of the present embodiment, the first deceleration throttle valve 43a (the first flow rate throttle valve) constitutes the exhaust speed reducer, and the second deceleration throttle valve 43b (the second flow rate throttle valve) constitutes the supply speed reducer.

Furthermore, according to the fluid circuit 40b of the present embodiment, the electro-pneumatic regulator 49 (a pressure reducing valve) constitutes the exhaust speed reducer and the supply speed reducer.

### Gate Valve Drive Method

Next, a drive method in the gate valve drive system will be described based on the embodiments illustrated in Figs. 1, 4 to 5, and 9.

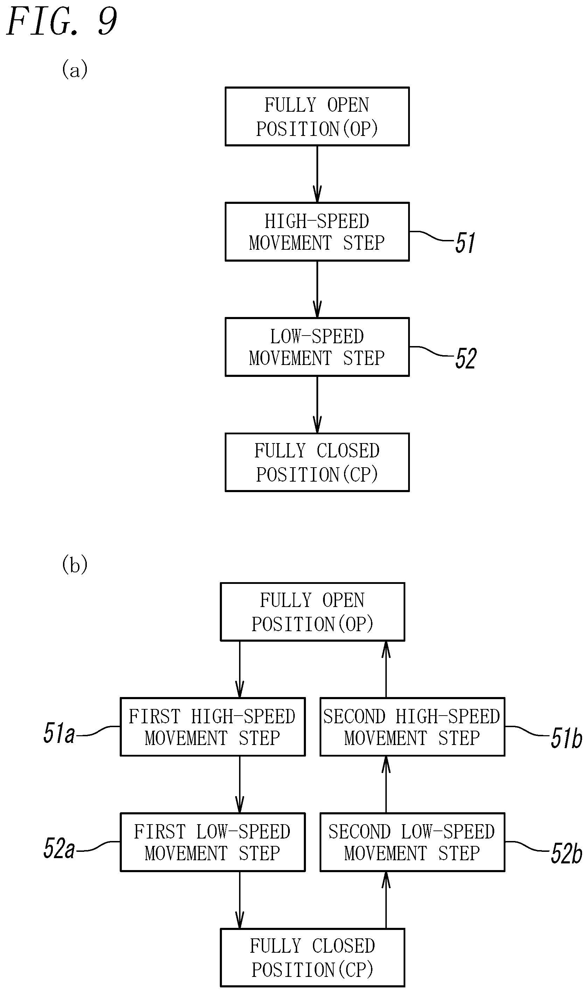

Fig. 9(a) illustrates a gate valve drive method including a single valve closing process from the fully open position OP to the fully closed position CP.

The gate valve drive method of the present invention is a method including a high-speed movement step and a subsequent low-speed movement step.

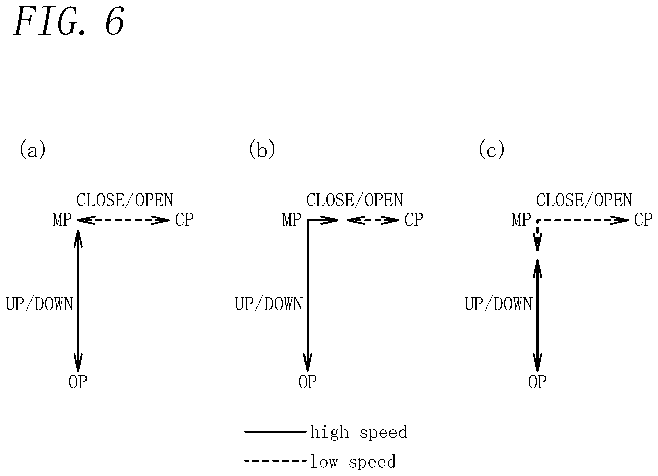

Hereinafter, as illustrated in Fig. 6(a), a case will be described in which the valve plate 3 is moved over the entire section of parallel movement in a high-speed movement step, and is moved over the entire section of perpendicular movement in a low-speed movement step.

In a single valve closing operation in which the valve plate 3 is moved from the fully open position OP, at which the valve plate 3 is not opposed to the opening 2, through the opposed position MP, at which the valve plate 3 is opposed to the opening 2, to the fully closed position CP, at which the opening 2 is closed, the method includes: a high-speed movement step 51 of moving the valve plate 3 at a high speed from the fully open position OP until the drive piston 13 comes into contact with the deceleration piston 15; and a low-speed movement step 52, subsequent to the high-speed movement step 51, of decelerating the deceleration piston 15 with the deceleration throttle valve 43a or the electro-pneumatic regulator 49 and moving the valve plate 3 to the fully closed position CP at a low speed.

Each step will be described in detail below.

### Fully Open Position

First, the valve plate 3 is at the fully open position OP in Fig. 9(a).

In a state of the fully open position OP in the left part of Figs. 1 and 4(a), in the fluid circuit 40a in Fig. 7, the first solenoid S1 of the first switching valve 44 is in an OFF state, and the second solenoid S2 is in an ON state.

The third solenoid S3 of the second switching valve 45 is in an OFF state.

Specifically, in the state of the fully open position OP, air is supplied to the deceleration pressure chamber 18 and the second drive pressure chamber 17, and air is exhausted from the first drive pressure chamber 16.

Thus, the drive rod 5 is in a state in which it is maximally extended from the air cylinder C.

### High-Speed Movement Step

Here, the process proceeds to the high-speed movement step 51 in Fig. 9(a).

In the present embodiment, in this step, movement from the fully open position OP to the opposed position MP (the right part of Fig. 1 and Fig. 4b) by the parallel movement mechanism E occurs.

In this step, the first solenoid S1 of the first switching valve 44 is turned ON, and the second solenoid S2 is turned OFF.

The third solenoid S3 of the second switching valve 45 remains OFF.

In this state, air is supplied to the first drive pressure chamber 16 and the deceleration pressure chamber 18, and air is exhausted from the second drive pressure chamber 17.

The exhaust speed from the second drive pressure chamber 17 is set to be as high as possible while avoiding noise and vibration due to an impact caused when the drive piston 13 hits the cylinder end, by adjusting the degree of throttling of the second drive throttle valve 42a.

Accordingly, in the drive cylinder portion C1, the drive piston 13 is moved at a high speed until it comes into contact with the deceleration piston 15.

As a result, the valve plate 3 can be moved at a high speed from the fully open position OP to the opposed position MP by the parallel movement mechanism E.

### Low-Speed Movement Step

Next, following the high-speed movement step 51, the process proceeds to the low-speed movement step 52 in Fig. 9.

In the present embodiment, after the drive piston 13 comes into contact with the stopper portion 15a of the deceleration piston 15, the third solenoid S3 of the second switching valve 45 is switched ON.

Then, the air in the deceleration pressure chamber 18 is exhausted via the third supply/exhaust port 20c.

The exhaust speed is set to be lower than that in the high-speed movement step by the first deceleration throttle valve 43a (the first flow rate throttle valve) provided in the third air flow path 43 in Fig. 7.

Specifically, the exhaust speed from the deceleration pressure chamber 18 is sufficiently reduced, compared with the exhaust speed from the second drive pressure chamber 17 in the high-speed movement step 51.

Thus, the drive piston 13, in a state in which it is in contact with the deceleration piston 15, is moved from the opposed position MP to the fully closed position CP at a speed lower than the movement speed in the high-speed movement step 51.

Note that, in the valve opening process, the valve plate 3 may be moved over the entire section only by a high-speed movement step without a low-speed movement step.

Furthermore, as will be described below, the valve opening process may also include a low-speed movement step and a high-speed movement step.

As described above, the valve plate 3 is moved at a high speed by the drive piston 13 of the drive cylinder portion C1 in a parallel movement section from the fully open OP to the opposed MP.

Then, the valve plate 3 is moved at a low speed by the deceleration piston 15 of the deceleration cylinder portion C2 in a perpendicular movement section from the opposed position MP to the fully closed position CP.

Thus, the movement speed of the valve plate 3 over the entirety from the fully open to the fully closed is maintained as high as possible, and when the valve plate 3 comes into contact with the valve seat surface 6, impact and vibration are reduced, and dust generation is further suppressed.

Fig. 9(b) illustrates a gate valve drive method including a single valve closing process and a single valve opening process of the gate valve 100.

As illustrated in Fig. 9(b), a single valve closing process includes: a first high-speed movement step 51a until the drive piston 13 comes into contact with the deceleration piston 15; and a subsequent first low-speed movement step 52a.

The valve plate 3 is driven such that the movement speed thereof is lower in the first low-speed movement step 52a than in the first high-speed movement step 51a.

Furthermore, a single valve opening process includes: a second low-speed movement step 52b in which the drive piston 13, which is in contact with the deceleration piston 15, moves the valve plate 3 from the fully closed position CP; and a subsequent second high-speed movement step 51b in which the drive piston 13 moves the valve plate 3 to the fully open position OP.

The valve plate 3 is driven such that the movement speed thereof is higher in the second high-speed movement step 51b than in the second low-speed movement step 52b.

Each step will be described in detail below.

### Valve Closing Process

The first high-speed movement step 51a and the first low-speed movement step 52a in the valve closing process are substantially the same as the high-speed movement step 51 and the low-speed movement step 52 in Fig. 9(a) described above, and therefore description thereof is omitted.

### Valve Opening Process

### Second Low-Speed Movement Step

In the present embodiment, in a state in which the drive piston 13 is in contact with the stopper portion 15a of the deceleration piston 15, the third solenoid S3 of the second switching valve 45 is switched OFF.

Then, the deceleration pressure chamber 18 is supplied with air from the pressure supply source 47 via the third supply/exhaust port 20c.

The supply speed is set to be low by the second deceleration throttle valve 43b (the second flow rate throttle valve) provided in the third air flow path 43 in Fig. 7.

That is, the supply speed to the deceleration pressure chamber 18 is sufficiently lower than the supply speed to the second drive pressure chamber 17 in the second high-speed movement step 51b.

With this configuration, in the second low-speed movement step 52b, the drive piston 13, which is in contact with the deceleration piston 15, is moved from the fully closed position CP to the opposed position MP at a speed lower than the movement speed in the second high-speed movement step 51b.

Thus, the valve plate 3 can be moved at a low speed from the fully closed position CP to the opposed position MP, whereby friction and vibration associated with separation of the valve plate 3 from the valve seat surface 6 can be suppressed, and dust generation associated therewith can be prevented.

### Second High-Speed Movement Step

In the present embodiment, this step is movement from the opposed position MP to the fully open position OP by the parallel movement mechanism E.

In this step, the first solenoid S1 of the first switching valve 44 is turned OFF, and the second solenoid S2 is turned ON.

The third solenoid S3 of the second switching valve 45 remains OFF.

In this state, air is supplied to the second drive pressure chamber 17 and the deceleration pressure chamber 18, and air is exhausted from the first drive pressure chamber 16.

The exhaust speed from the first drive pressure chamber 16 is set to be as high as possible while avoiding noise and vibration due to an impact when the piston 13 hits the cylinder end, by adjusting the degree of throttling of the first drive throttle valve 41a.

Thus, in the drive cylinder portion C1, the drive piston 13 can be moved at a high speed from the opposed position MP to the fully open position OP by the parallel movement mechanism E.

Here, the first low-speed movement step 52a of the valve closing process and the second low-speed movement step 52b of the valve opening process may be the same movement speed or may be different movement speeds.

Similarly, the first high-speed movement step 51a of the valve closing process and the second high-speed movement step 51b of the valve opening process may be the same movement speed or may be different movement speeds.

### Other Drive Methods

In Fig. 6, the solid lines indicate the high-speed movement step, and the dotted lines indicate the low-speed movement step.

Furthermore, the top-bottom section indicates the movement section between the fully open position OP and the opposed position MP in which movement is performed by the parallel movement mechanism, and the left-right section indicates the movement section between the opposed position MP and the fully closed position CP in which movement is performed by the perpendicular movement mechanism.

Fig. 6a illustrates the case where H1 = h1 in Fig. 1.

More specifically, it is the case where the valve plate 3 is moved over the entire parallel movement section with the high-speed drive step and is moved over the entire perpendicular movement section with the low-speed drive step.

In this case, when the valve plate 3 is located between the opposed position MP and the fully closed position CP, the drive piston 13 comes into contact with the deceleration piston 15, and the valve plate 3 is moved at a low speed.

In the description of the drive method given above, the case of Fig. 6(a) has been described, but the relationship between the high-speed movement step and the parallel movement section can be changed by adjusting the structural relationship between H1 and h1 in the gate valve.

For example, in the case where H1 > h1 (Fig. 1), as illustrated in Fig. 6(b), the high-speed movement step is performed from the fully open position OP, beyond the opposed position MP, to a position between the opposed position MP and the fully closed position CP by the perpendicular movement mechanism F.

In this case, when the valve plate 3 is located between the fully closed position CP and the position between the opposed position MP and the fully closed position CP, the drive piston 13 comes into contact with the deceleration piston 15, and the valve plate 3 is moved at a low speed.

Thus, compared with the case where H1 = h1, a faster valve closing operation can be realized.

Furthermore, in the case where H1 < h1 (Fig. 1), as illustrated in Fig. 6(c), the high-speed movement step corresponds to the section from the fully open position OP to the opposed position MP by the parallel movement mechanism E.

In this case, when the valve plate 3 is located between the fully closed position CP and the position between the fully open position OP and the opposed position MP, the drive piston 13 comes into contact with the deceleration piston 15, and the valve plate is moved at a low speed.

Thus, compared with the case where H1 = h1, a more careful valve closing operation is performed, and further reduction of dust generation risk can be expected.

As described above, in the gate valve 100, by adjusting lengths of H1 and h1, it is possible to adjust the sections of the high-speed movement step and the low-speed movement step.

As described above, according to the gate valve drive system and the drive method of the present invention, it is possible to further suppress dust generation occurring when the valve plate comes into and out of contact with the opening, while maintaining, as much as possible, high-speed performance of a series of opening and closing operations between the fully open position and the fully closed position.

Although embodiments of the present invention have been described in detail, the present invention is not limited thereto, and it is understood that various configurations can be adopted without departing from the gist of the present invention.

### Reference Signs List

100 gate valve
1 valve body
1c bottom wall
2 opening
3 valve plate
3a valve seal member
4 valve shaft
5 drive rod
6 valve seat surface
7 bonnet
7a through hole
7b enlarged diameter portion
7c contact portion
8 cylinder housing
9 base frame
9a spring seat
10 side frame
11 center frame
11a first recess
11b first shoulder portion
11c second recess
11d second shoulder portion
11e stop roller
12 compression spring
13 drive piston
15 deceleration piston
15a stopper portion
15b internal communication passage
16 first drive pressure chamber
16a first communication passage
16b first supply/exhaust hole
17 second drive pressure chamber
17a second communication passage
17b second supply/exhaust hole
18 deceleration pressure chamber
18a third communication passage
18b third supply/exhaust hole
20a first supply/exhaust port
20b second supply/exhaust port
20c third supply/exhaust port
22 bearing
24a first guide roller
24b second guide roller
25 guide groove
26a first cam roller
26b second cam roller
27a first cam groove
27b second cam groove
28 bellows
40a and 40b fluid circuit
41 first air flow path
41a first drive throttle valve
42 second air flow path
42a second drive throttle valve
43 third air flow path (exhaust flow path, supply flow path)
43a first deceleration throttle valve (exhaust speed reducer, first flow rate throttle valve)
43b second deceleration throttle valve (supply speed reducer, second flow rate throttle valve)
44 first switching valve
45 second switching valve
46 regulator
47 pressure supply source
48 silencer
49 electro-pneumatic regulator (exhaust speed reducer, supply speed reducer, pressure reducing valve)
51 high-speed movement step
51a first high-speed movement step
51b second high-speed movement step
52 low-speed movement step
52a first low-speed movement step
52b second low-speed movement step
A valve assembly
B drive unit
C air cylinder
C1 drive cylinder portion
C2 deceleration cylinder portion
D connection portion
E parallel movement mechanism
F perpendicular movement mechanism
L axis
OP fully open position
CP fully closed position
MP opposed position
P1 start position
P2 end position
S1 first solenoid
S2 second solenoid
S3 third solenoid

## Claims

1. A gate valve drive system for driving a gate valve having:
a valve assembly including a valve plate for opening and closing an opening communicating with a vacuum chamber, and a valve shaft connected to the valve plate;
a drive unit having a bonnet through which the valve shaft extends so as to be displaceable in an axial direction, and an air cylinder for driving the valve assembly, the air cylinder being provided on a surface of the bonnet opposite to the valve plate; and
a connection portion that includes a parallel movement mechanism that moves the valve plate parallel to a valve seat surface of the opening and a perpendicular movement mechanism that moves the valve plate perpendicularly to the valve seat surface, and that connects the valve assembly and the drive unit so as to be relatively displaceable, wherein
the air cylinder includes a drive cylinder portion in which a drive piston provided with a drive rod is slidably disposed, and a deceleration cylinder portion that is provided closer to the bonnet than is the drive cylinder portion, in which a deceleration piston is slidably disposed, and that makes a movement speed of the valve plate slower than a speed of movement by the drive cylinder portion in a state in which the drive piston is in contact with the deceleration piston, the cylinder portions being formed in mutual communication, and
an exhaust speed reducer for reducing exhaust speed is provided in an exhaust flow path from a deceleration pressure chamber, which is formed in the deceleration cylinder portion, on the bonnet side of the deceleration piston.

2. The gate valve drive system according to claim 1, wherein
the drive unit is provided with a first supply/exhaust port, a second supply/exhaust port, and a third supply/exhaust port,
the first supply/exhaust port communicates with a first drive pressure chamber formed on a drive rod side of the drive piston, via a first communication passage provided in the drive unit,
the second supply/exhaust port communicates with a second drive pressure chamber formed between the drive piston and the deceleration piston, via a second communication passage provided in the drive unit, and
the third supply/exhaust port communicates with the deceleration pressure chamber via a third communication passage provided in the drive unit, and the exhaust flow path is connected to the third supply/exhaust port.

3. The gate valve drive system according to claim 2,
wherein the first to third supply/exhaust ports are provided in the bonnet.

4. The gate valve drive system according to claim 2, further comprising a fluid circuit including a pressure supply source, wherein
the fluid circuit has a first switching valve that switches a supply state of air from the pressure supply source to the drive cylinder portion, and
the first switching valve is connected to the first supply/exhaust port and the second supply/exhaust port, and selectively switches between a first switching state in which air is supplied to the first drive pressure chamber and air is exhausted from the second drive pressure chamber and a second switching state in which air is exhausted from the first drive pressure chamber and air is supplied to the second drive pressure chamber.

5. The gate valve drive system according to claim 4, wherein
the fluid circuit has a second switching valve that switches a supply state of air from the pressure supply source to the deceleration cylinder portion,
the second switching valve is connected to the third supply/exhaust port and selectively switches between a state in which air is supplied to the deceleration pressure chamber and a state in which air is exhausted from the deceleration pressure chamber, and
the exhaust speed reducer is a first flow rate throttle valve provided between the third supply/exhaust port and the second switching valve.

6. The gate valve drive system according to claim 4,
wherein the exhaust speed reducer is a pressure reducing valve provided between the third supply/exhaust port and the pressure supply source.

7. The gate valve drive system according to claim 1,
wherein a supply flow path to the deceleration pressure chamber is provided with a supply speed reducer for reducing supply speed.

8. The gate valve drive system according to claim 7, wherein
the exhaust speed reducer includes a first flow rate throttle valve, and
the supply speed reducer includes a second flow rate throttle valve.

9. The gate valve drive system according to claim 7,
wherein the exhaust speed reducer and the supply speed reducer include pressure reducing valves.

10. A gate valve drive method for driving the gate valve drive system according to claim 1, the method comprising, in a single valve closing process for moving the valve plate from a fully open position at which the valve plate is not opposed to the opening, through an opposed position at which the valve plate is opposed to the opening, to a fully closed position at which the valve plate closes the opening:
a high-speed movement step of moving the valve plate at a high speed from the fully open position until the drive piston comes into contact with the deceleration piston; and
a low-speed movement step, subsequent to the high-speed movement step, of moving the valve plate to the fully closed position at a speed lower than that in the high-speed movement step in a state in which the drive piston is in contact with the deceleration piston.

11. A gate valve drive method for driving the gate valve drive system according to claim 7, wherein
a single valve closing process for moving the valve plate from a fully open position at which the valve plate is not opposed to the opening, through an opposed position at which the valve plate is opposed to the opening, to a fully closed position at which the valve plate closes the opening includes:
a first high-speed movement step of moving the valve plate from the fully open position until the drive piston comes into contact with the deceleration piston; and
a first low-speed movement step, subsequent to the first high-speed movement step, of moving the valve plate to the fully closed position in a state in which the drive piston is in contact with the deceleration piston, a movement speed of the valve plate being lower in the first low-speed movement step than in the first high-speed movement step, and
a single valve opening process for moving the valve plate from the fully closed position, through the opposed position, to the fully open position includes:
a second low-speed movement step of moving the valve plate from the fully closed position in a state in which the deceleration piston is in contact with the drive piston; and
a second high-speed movement step, subsequent to the second low-speed movement step, of moving the valve plate to the fully open position by the drive piston, the movement speed of the valve plate being higher in the second high-speed movement step than in the second low-speed movement step.

12. The gate valve drive method according to claim 10 or 11,
wherein, when the valve plate is located between the opposed position and the fully closed position, the drive piston is in contact with the deceleration piston.

13. The gate valve drive method according to claim 10 or 11,
wherein, when the valve plate is located between the fully closed position and a position between the opposed position and the fully closed position, the drive piston is in contact with the deceleration piston.

14. The gate valve drive method according to claim 10 or 11,
wherein, when the valve plate is located between the fully closed position and a position between the fully open position and the opposed position, the drive piston is in contact with the deceleration piston.
